# EUROPEAN PATENT APPLICATION

(11) **EP 2 172 423 A2**
(43) Date of publication of application: **07.04.2010**
(21) Application number: 08826022.9
(22) Date of filing: 15.08.2008
(51) Int. Cl.: C01B 33/033

(54) **METHOD FOR PRODUCING POLYCRYSTALLINE SILICON FROM A HYDROSILICOFLUORIC ACID SOLUTION AND A PLANT FOR PRODUCING SILICON TETRAFLUORIDE AND POLYCRYSTALLINE SILICON**

(30) Priority: 19.06.2007 RU 2007122706; 19.06.2007 RU 2007122705; 23.08.2007 RU 2007131800
(71) Applicant: Zakrytoe Aktsionernoe Obschestvo "solar Si", Ul. Sovetskoi Armii, 2 Moscow 120110 (RU)
(72) Inventor: CHUKANOV, Andrey Pavlovich, Moscow, 125212 (RU); SHEVCHENKO, Ruslan Alekseevich, Moscow, 117602 (RU); VAKHRUSHIN, Alexander Yurevich, Moscow, 125195 (RU); MANCHULYANTSEV, Oleg Alexandrovich, Moscow, 103575 (RU); SMETANKINA, Stella Valerievna, Moscow, 103287 (RU)
(74) Representative: Benatov, Emil Gabriel
(86) International application number: PCT/RU2008/000523
(87) International publication number: WO 2009/005412

(57) **Abstract**

This invention relates generally to the area of metallurgy and/ or chemistry and, more particularly, to the technologies and facilities for production of gaseous silicon tetrafluoride and polycrystalline silicon from gaseous silicon tetrafluoride. The technology for production of silicon tetrafluoride from fluorosilicic acid solution includes: generation of acid extract, extract washing, extract drying, extract decompounding, bubbling of unseparated gaseous silicon tetrafluoride and hydrogen fluoride flow through silicon dioxide. The technology of silicon production includes interreaction between gaseous silicon tetrafluoride and magnesium vapour with subsequent separation of the final product. Technical results is as follows: production of silicon with high purity level, increased output of the final product, improvement of environmental friendliness of production process, simplification of the technological process of silicon production, decreased prime cost of the final product.

## Description

### Field of the Invention

This invention relates generally to the area of metallurgy and/ or chemistry and, more particularly, to the technologies and facilities for production of "solar grade" polycrystalline silicon in the form of spherically shaped powder from the wastes of phosphorus production, in particular, from fluorosilicic acid solution.

### Background for the Invention

Nowadays development of alternative energy sector including solar energy is paid much attention worldwide. Photoelectric elements production is increased from 1200 MW up to 1727 MW all over the world in the period of 2004-2005. However, further growth of solar cells production is restrained by shortage of silicon (including "solar grade" silicon) as well as by its high price and ecological problems resulted from the technology of its production. According to the data from the *European Photovoltaic Industry Association (EPIA)* solar energy share in the world scope will come to 15-20% by 2015 and silicon production will be increased up to 200 000 tons.

There are known technologies of silicon production in industrial scale: by means of carbothermic reduction of quartzite [patent application RU Nº 2003125002/15, MΠK⁷ C01 B9/00, published 10.03.2005]; by chloration of the finest silicon powder with anhydrous chlorine hydride, followed by purification of chlorosilanes formed in the process of chloration via rectification to the required level of purity; by fluoride-hydride technology. These technologies of silicon production are multistageous, energy-consuming and they do not provide acceptable price for produced polycrystalline silicon due to low output of the trade product and presence of a big number of impurities (market prime cost for "solar grade" polycrystalline silicon produced with the known technologies makes 20$ per kilo).

There are known technologies of silicon production based on silicon reduction from silicon tetrafluoride, produced, for example, by fluorization of silicon dioxide [patent RU 2272755C1 published 27.03.2006, application WO 2005/021431A1 published 10.03.2005].

Disadvantage of tetrafluoride production from silicon dioxide is in a big number of impurities and high energy consumption.

Prime cost for polycrystalline silicon is determined mainly by the cost of raw material, technological consumables, energy consumed and expenditures to provide ecologically and technologically safe production. The condition to decrease silicon prime cost is to use in the quality of raw materials for its production certain environmentally hazardous technological run-offs/ wastes of chemical production, that are generated annually in the amount of tens of thousands tons in the territory of Russian Federation, USA, Canada, CIS countries (like Belorussia and Ukraine), Romania, Czech Republic and other countries.

Thus, for instance, a secondary product of apatite processing in fertilizers production, specifically fluorosilicic acid (*H₂SiF₆*), can be used as a source of raw materials for silicon tetrafluoride production.

There is a known method of silicon tetrafluoride production from fluorosilicic acid solution consisting of: generation of fluosilicate, its washing, drying and subsequent decompounding with formation of gaseous silicon tetrafluoride and hydrogen fluoride followed by separation of the final product [patent RU 2046095C1 MΠK⁶ C01B33/10, published 20.10.1995].

Disadvantage of this method is as follows: after the stage of decompounding fluosilicate the two generated gaseous products (which are silicon tetrafluoride (*SiF_{4gas}*) and hydrogen fluoride (*HF_{gas}))* are separated by *HF* cryogenic condensation at the temperature of -78°C. This stage of silicon tetrafluoride and hydrogen fluoride separation complicates the technological process as it requires usage of additional cryogenic equipment and high energy consumption that results in increased prime cost of the final product, i.e. silicon tetrafluoride cost.

There is a known method of silicon tetrafluoride production in which fluorosilicic acid is decompounded into silicon tetrafluoride and hydrogen fluoride by being heated up to the temperature of 112°C, and then gas mixture is flowed though silicon dioxide [patent GB 1009564 published 10.11.1965].

Disadvantage of this method is that decompounding of fluorosilicic acid is performed by its heating that increases energy consumption. Flowing of silicon tetrafluoride and hydrogen fluoride gas mixture though silicon dioxide results in generation of additional silicon due to interreacting of dioxide and hydrogen fluoride, but also it results in generation of water that has to be eliminated from the reaction zone that requires to include an additional operation.

There is a known method of silicon tetrafluoride production by interreaction of hydrogen fluoride and silicon dioxide immersed into concentrated sulfuric acid in order to eliminate water from the reaction zone [patent JP 57135711 published 21.08.1982].

However this method is used for tetrafluoride production whereas in the claimed method the increased tetrafluoride output from fluorosilicic acid happens due to flowing unseparated mixture of hydrogen fluoride and tetrafluoride through silicon dioxide in the presence of oleum.

There is a known method of silicon reduction from silicon dioxide by magnesium vapour [patent RU 2036143 C1 MΠK6 C01B33/023, published 27.05. 1995]. Disadvantage of this method is that silicon dioxide is used as a raw material for silicon reduction that results in producing silicon containing a large number of impurities.

There is a known method of silicon production that includes interreaction of fluorosilicon-containing compound with reducing agent [patent RU 2035397C1 MΠK⁶ C01B 33/02 published 20.05.1995]. Disadvantage of this method is that in the quality of silicon reducing agent atomic hydrogen is used that imposes higher safety demands for the production.

There is a known method of silicon production by interreaction of silicon tetrafluoride and metals of the group 1 and group 2, magnesium in particular [application WO 03059814 A, published 24.07.2003].

Disadvantage of this method is that it results in production of amorphous silicon.

There is a known facility for polycrystalline silicon production that includes soaking chamber [patent RU 2224715 C1, published 27.02.2004]. Disadvantage of this facility is that it is designed to produce silicon from trichlorosilane with consequent reduction by hydrogen; it is not applicable to perform the process of silicon production from fluorosilicic acid solution.

There is a known facility for polycrystalline silicon production that includes soaking chamber [patent RU 2066296 C1, published 10.09.1996] which has the same drawback characteristic for the facility described here above, that is incapability to produce polycrystalline silicon from fluorosilicic acid solution.

### Summary of the Invention

An object of the claimed invention is to create a continuous process of producing solar grade polycrystalline silicon from fluorosilicic acid solution with the aim to provide the prime cost reduction of the final product.

The technical results that will be achieved by implementing the claimed group of invention are as follows: production of polycrystalline silicon from fluorosilicic acid solution that conforms to "solar grade" silicon by its impurity characteristics; increased output of the final product (polycrystalline silicon) due to increased output of silicon tetrafluoride generated; improvement of environmental friendliness characteristics of production process due to utilization of the generated by-products (fluorhydric acid primarily) immediately in the technological process; simplification of technological process of silicon tetrafluoride production due to elimination of the stage of silicon tetrafluoride and hydrogen fluoride separation; decreased energy consumption due to performing low-temperature reactions for silicon reduction; development of integrated technological process of polycrystalline silicon production from fluorosilicic acid solution, mainly in the form of spherically shaped powder that conforms to "solar grade" silicon by its impurity characteristics.

The advantages listed here above allow to significantly decrease the prime cost of polycrystalline silicon production (down to 10$ per kilo) while retaining its high purity (99,99%-99,999%) and impurities content appropriate for its use in solar energy sector.

Challenged technical results are achieved due to the following characteristics of the technology of polycrystalline silicon production from fluorosilicic acid solution:
- organo-soluble fluosilicate is generated from fluorosilicic acid solution by interreaction of fluorosilicic acid and organic base solution;
- generated fluosilicate is dried with the flow of air or inert gas heated up to the temperature of 55-60°C;
- gaseous silicon tetrafluoride is produced from fluosilicate;
- gaseous silicon tetrafluoride is produced by decompounding fluosilicate into gaseous silicon tetrafluoride and hydrogen fluoride;
- generated gaseous silicon tetrafluoride and hydrogen fluoride without separation are flowed though silicon dioxide immersed into oleum;
- silicon is reduced from the generated gaseous silicon tetrafluoride with magnesium vapour at the temperature not above 1000°C;
- the resultants which are mixed powders of silicon and magnesium fluoride are separated with simultaneous output of polycrystalline silicon in the form of spherically shaped powder;
- produced polycristalline silicon is separated from magnesium fluoride.

Such a chain of technological operations where products generated at the previous operation are the raw material for the next one makes it possible to produce polycrystalline silicon of high purity. Production of organo-soluble fluosilicate provides generation of extra pure silicon tetrafluoride. Drying of fluosilicate provides acceleration of technological processes.

Resulted from bubbling of unseparated *SiF_{4gas}* and *HF_{gas}* gaseous flow by means of neutralization of hydrogen fluoride, for instance, in bubbling reactor invaded with silicon dioxide immersed into oleum, *SiF_{gas}* does not interreact with it while gaseous phase of *HF_{gas}* starts interreacting by the formula: *SiO₂ + 4HF_{gas} = SiF_{4gas} + H₂O;* this reaction results in generation of additional gaseous silicon tetrafluoride that enhances total output of silicon tetrafluoride.

Therefore, bubbling of unseparated *SiF_{4gas}* and *HF_{gas}* gaseous flow through silicon dioxide results in production of gaseous *SiF₄* only with no impuritites but with enhanced Si output. Additional silicon tetrafluoride *(SiF_{4gas})* reduction from *SiO₂* in presence of *HF* makes it possible to enhance *SiF_{4gas}* total output with simultaneous utilization of hydrogen fluoride immediately in the technological process; that eliminates the stage of silicon tetrafluoride and hydrogen fluoride separation out of the technological process, otherwise this stage would require use of additional equipment and provision of technological conditions for high energy consumption.

Oleum presence provides removal of water generated by the reaction that results in elimination of additional technological operations thereof.

Silicon reduction at the temperature not above 1000°C leads to reduced energy consumption and to improved safety of the production process.

Separation of resultants which are mixed powders of silicon and magnesium fluoride with simultaneous output of polycrystalline silicon in the form of spherically shaped powder eliminates the necessity for additional operations to convert amorphous silicon into crystalline one that results in costs reduction, provides process continuity as well as simplifies separation of big spherically shaped crystals from magnesium fluoride powder.

In addition, in particular situation of implementing the invention, fluosilicate (extract) is washed before being decompounded.

In addition, in particular situation of implementing the invention, solution of trialkylamine or solution of trialkylamine dissolved in triethylbenzene or solution of trialkylamine in the mixed dodecane and oktyl spirit is used as an organic base.

In addition, in particular situation of implementing the invention, it is appropriate to make sol (extract) decompounding by its being treated with concentrated mineral acid.

In addition, in particular situation of implementing the invention, it is reasonable to use oleum (containing 3-5 mass% of free sulphuric anhydride) as mineral acid.

In addition, in particular situation of implementing the invention, it is recommended to immerse silicon dioxide into 4-7% oleum solution.

In addition, in particular situation of implementing the invention, it is appropriate to use silica sand as silicon dioxide.

In addition, in particular situation of implementing the invention, separation of reaction mixture with simultaneous output of silicon in the form of spherically shaped powder is performed by centrifugal disintegration method.

In addition, in particular situation of implementing the invention, centrifugal disintegration here is: mixed powder of silicon and magnesium fluoride is sent into rotary crucible placed inside melting furnace where the mixture is exposed to plasma arc formed between crucible and unsmeltable electrode.

In addition, in particular situation of implementing the invention, it is recommended to perform centrifugal separation in atmosphere of inert gas.

In addition, in particular situation of implementing the invention, silicon reduction is performed in presence of inert gas that provides silicon tetrafluoride transportation to soaking chamber as well as resultants extraction from vortex reactor.

In addition, in particular situation of implementing the invention, it is reasonable to use argon as inert gas.

In addition, in particular situation of implementing the invention, magnesium vapour are sent to vortex reactor from vacuum evaporator.

In addition, in particular situation of implementing the invention, polycrystalline silicon is produced in the form of spherically shaped silicon powder with the particles size ranging mainly between 0,3 mm to 0,6 mm.

In addition, in particular situation of implementing the invention, silicon spherical powder is washed with distilled water and bidistilled water.

In order to implement the technology of polycrystalline silicon production from fluorosilicic acid solution in the form of spherically shaped powder and to meet the challenge and achieve the claimed technical results it is preferable to use a facility for continuous production of polycrystalline silicon from the fluorosilicic acid solution in the form of spherically shaped powder. This facility consists of units connected by pipeline system: unit that provides extraction of fluorosilicic acid solution in presence of extractants; unit that provides drying of the extract produced; unit that provides acid treatment of the extract to produce gaseous silicon tetrafluoride and hydrogen fluoride; unit that provides hydrogen fluoride neutralization with generation of silicon tetrafluoride; unit that provides production of magnesium vapour from magnesium smelt; unit for silicon reduction from gaseous silicon tetrafluoride with magnesium vapour; unit that provides separation of the reaction mixture of silicon and magnesium fluoride powder with simultaneous silicon output in the form of spherically shaped powder; unit for separation of silicon in the form of spherically shaped powder and magnesium fluoride.

In addition, in particular situation of implementing the invention, unit that provides extraction of fluorosilicic acid solution includes at least one centrifugal extractor.

In addition, in particular situation of implementing the invention, unit that provides extract drying includes at least one bubbling dryer equipped with heat-exchange apparatus.

In addition, in particular situation of implementing the invention, unit that provides acid treatment of the extract to produce gaseous silicon tetrafluoride and hydrogen fluoride includes at least one centrifugal extractor.

In addition, in particular situation of implementing the invention, unit that provides hydrogen fluoride neutralization with production of silicon tetrafluoride includes at least one bubbling reactor invaded with silicon dioxide.

In addition, in particular situation of implementing the invention, centrifugal extractor and bubbling dryer are performed with protective covering.

In addition, in particular situation of implementing the invention, protective covering is done based on fluoroplastic.

In addition, in particular situation of implementing the invention, at least one vacuum evaporator is used as a unit that provides magnesium vapour production from magnesium smelt.

In addition, in particular situation of implementing the invention, at least one vortex reactor is used as soaking chamber for silicon reduction.

In addition, in particular situation of implementing the invention, vacuum evaporator and vortex reactor are performed with protective lining.

In addition, in particular situation of implementing the invention, vortex reactor is equipped with vacuum pump.

In addition, in particular situation of implementing the invention, vortex reactor is equipped with a unit to provide its heating.

In addition, in particular situation of implementing the invention, unit for final product separation includes at least one tank invaded with fluid with density not exceeding the density of silicon.

In addition, in particular situation of implementing the invention, unit for silicon production in the form of spherically shaped powder includes melting furnace equipped with crucible (that can be rotated) and electrode between which plasma arc is maintained.

In addition, in particular situation of implementing the invention, electrode is done unsmeltable.

In addition, in particular situation of implementing the invention, unit for final product separation is done in the form of vibration table.

In addition, in particular situation of implementing the invention, the facility for polycrystalline silicon production additionally includes melting furnace that provides silicon production in ingots.

In addition, in particular situation of implementing the invention, unit for cooling down the mixture resulted from reductive reaction.

In addition, in particular situation of implementing the invention, the facility additionally includes silicon packaging line.

### Brief description of the drawings

The above-mentioned and other features and advantages of this invention are shown in the following description of its preferred embodiment presented with references to the accompanying drawings wherein:
Fig. 1 - General layout of the facility for polycrystalline silicon production in the form of spherically shaped powder;
Fig. 2 - General flow chart for the technology of polycrystalline silicon production in the form of spherically shaped powder.

### Detailed description of the Invention

Production of polycrystalline silicon in the form of spherically shaped powder from fluorosilicic acid solution is preferably to perform in two main technological stages.

At the first technological stage gaseous silicon tetrafluoride is produced from hydrofluorosilicic acid (H2SiF6) solution in the assembly for silicon tetrafluoride production from hydrofluorosilicic acid solution. This assembly includes the following units joined together by pipeline system equipped with stop valves: unit **1** for extraction of fluorosilicic acid water solution (*H₂SiF₆*) that includes at least one centrifugal extractor with protective fluoroplastic covering; unit **2** that provides drying of the extract produced and includes at least one bubbling dryer with protective fluoroplastic covering and equipped with heat-exchange apparatus; unit **3** that provides extract acid treatment with generation of gaseous silicon tetrafluoride and hydrogen fluoride and includes at least one centrifugal extractor with protective fluoroplastic covering; unit **4** that provides hydrogen fluoride neutralization with generation of additional silicon tetrafluoride and includes at least one bubbling reactor with protective fluoroplastic covering, staffed, for example, with silicon dioxide (in the quality of which it is reasonable to use silica sand). By using the described assembly silicon tetrafluoride is produced from fluorosilicic acid solution by the following technology.

Hydrofluorosilicic acid water solution (*H₂SiF₆*) (preferrably 20%-concentration) is treated in the *unit **1** for extract production* by organic base solution (extractant), for instance by solution of trialkylamine (*TAA*), or solution of trialkylamine dissolved in triethylbenzene, or solution of trialkylamine in the mixed dodecane and oktyl spirit that results in producing organo-soluble sol (extract) like *(TAAH)₂SiF₆*, for example.

After extraction and phases precipitation is completed, the received extract of hydrofluorosilicic acid is separated from a liquid phase, washed with HF water solution, dried in the unit **2** (that includes bubbler with protective fluoroplastic covering equipped with heat-exchange apparatus) by flow of air or inert gas heated up to the temperature of 55-60°C and then treated with concentrated mineral acid (oleum mainly) containing 3-5% of sulphuric anhydride in the unit ***3** for extract acid treatment* with generation of gaseous silicon tetrafluoride *SiF_{4gas}* and hydrogen fluoride *HF_{gas}*. Liquid phase from this operation is returned back to the extraction stage. Gaseous products of fluosilicate decompounding, i.e. *SiF_{4gas}* 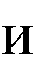 *HF_{gas},* are produced in the unit **2** under the following reaction:

*(TAAH)₂SiF₆*+*nH₂SO₄*→*SiF₄ → SIF₄₂ₐ₃*+*2HF₂ₐ₃*+*(TAAH)₂SO₄*^{●}*(H₂SO₄)ₙ₋₁*

(if trialkylamine solution is used as extractant). After gas evolving and phases precipitating is completed, organic phase is separated from the liquid one, consequently washed up by water and sodium hydroxide water solution to complete extraction of *H₂SO₄*. Regenerated extractant is returned to the stage of *H_{Z}SiF₆* extraction. Gaseous products produced as a result of fluosilicate decompounding, i.e. silicon tetrafluoride (*SiF_{4gas}*) and hydrogen fluoride (*HF_{gas}*) are sent unseparated into the unit **4** that provides hydrogen fluoride neutralization with production of additional silicon tetrafluoride that includes at least one bubbler with protective fluoroplastic covering invaded with composition that provides hydrogen fluoride neutralization, for example, with silicon dioxide in the quality of which it is preferable to use silica sand.

Gaseous silicon tetrafluoride (*SiF_{4gas}*) when bubbling through silicon dioxide (*SiO₂*) does not interreact with it, but the reaction *4HF_{gas} + SiO₂* → *SiF₄*↑+ *2H₂O* results in producing additional gaseous silicon tetrafluoride (*SiF_{4gas}*) that provides increased total output of silicon tetrafluoride. Simultaneously with increased gaseous silicon tetrafluoride output it is provided a process of neutralization of such a hazardous product as hydrogen fluoride (hydrofluoric acid) immediately in technological process.

It is also possible to produce organic fluosilicate (extract) by method of continuous countercurrent extraction. In order to perform this preferable option of implementing the invention it is reasonable to use as unit 1 a countercurrent extractor that provides at least 6 stages - 5 stages to perform extraction of *H₂SiF₆* and the sixth one - to provide extract washing up. Produced at the last stage fluorosilicic acid extract is dried with flow of air or inert gas heated up to the temperature of 55-60°C and treated with concentrated mineral acid (oleum mainly) containing 3-5% of sulphuric anhydride.

After producing gaseous silicon tetrafluoride with increased silicon output and low impurity content as per the method described, the next technological stage is performed, i.e. silicon reduction from gaseous silicon tetrafluoride produced at the previous stage.

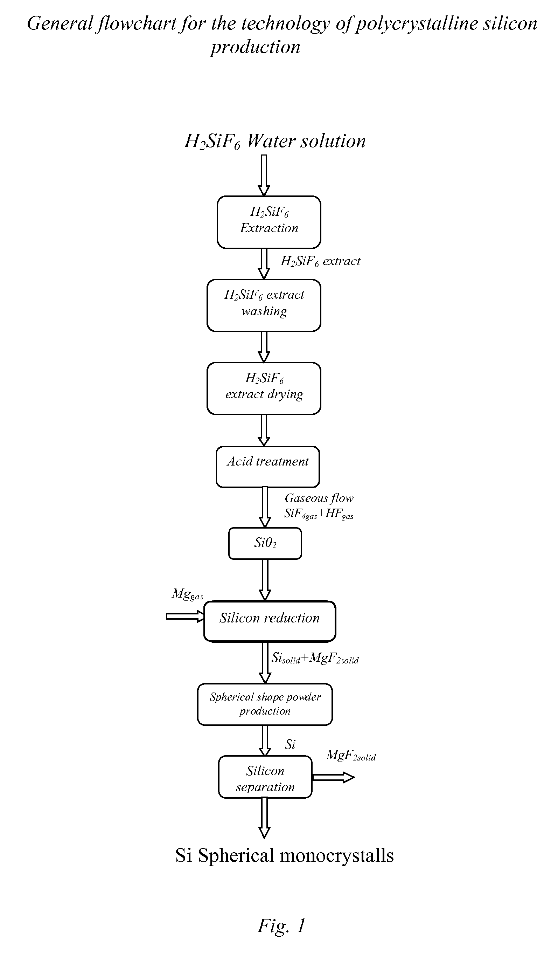

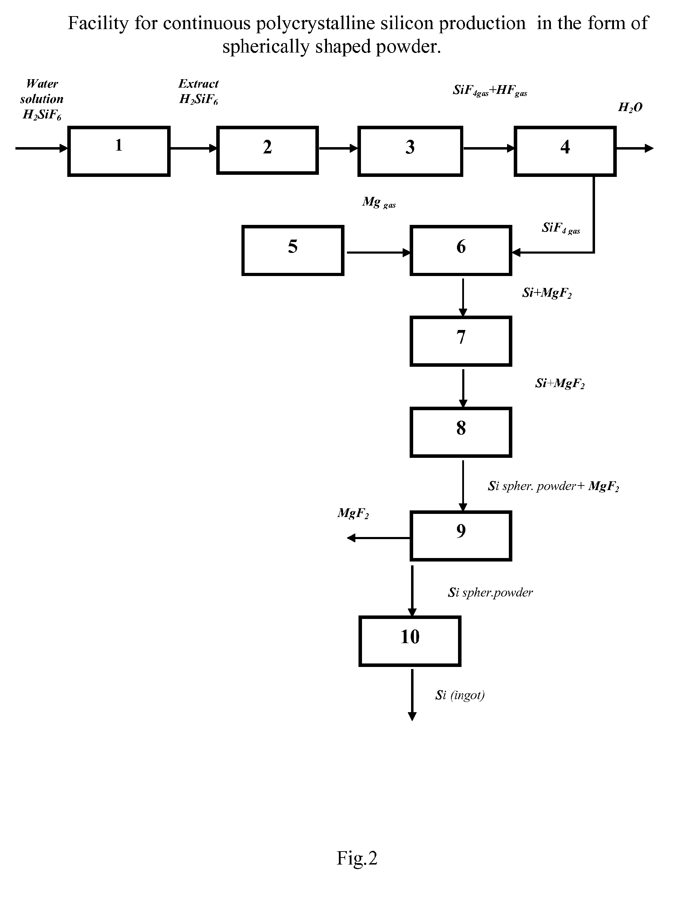

In order to produce polycrystalline silicon meeting the declared characteristics in impurity content and price, it is preferable to use the facility for polycrystalline silicon production shown at the fig. 1, and the technology for polycrystalline silicon production shown at the fig. 2 to be implemented by using this facility.

The facility for continuous polycrystalline silicon production from fluorosilicic acid (fig. 1) includes the following units joined together with a pipeline system equipped with stop valves: unit **1** for extraction of fluorosilicic acid water solution (*H₂SiF₆*) that includes at least one centrifugal extractor with protective fluoroplastic covering; unit **2** to provide produced extract drying that includes at least one bubbling dryer with protective fluoroplastic covering and equipped with heat-exchange apparatus; unit **3** that provides acid treatment of the extract with production of gaseous silicon tetrafluoride and hydrogen fluoride that includes at least one centrifugal extractor with protective fluoroplastic covering; unit **4** that provides hydrogen fluoride neutralization to produce additional silicon tetrafluoride that includes at least one bubbling reactor with protective fluoroplastic covering, invaded, for example, with silicon dioxide (silica sand); unit **5** that provides magnesium vapour production from magnesium smelt and includes at least one vacuum evaporator with protective lining; unit **6** for silicon reduction from silicon tetrafluoride with magnesium vapour in the quality of which at least one vortex reactor is used equipped with vacuum pump to provide air collection from the chamber and unit for heating the reaction chamber; unit **7** for cooling down the reaction mixture formed due to reduction; unit **8** that provides separation of reaction mixture into powders of silicon and magnesium fluoride with simultaneous output of spherically shaped silicon powder; unit **9** that provides separation of spherically shaped silicon powder and magnesium fluoride. Protective fluoroplastic covering provides protection of equipment from attack of aggressive media during operations that prolongs its operating life. Number of the units required is determined by the capacity of the facility that is calculated based upon the volume of acid to be processed and silicon produced.

In addition, the facility may include units that are not directly involved into the silicon production process but they provide supporting operations, for instance, silicon packaging line, magnesium fluoride packaging line, line for producing plaster stone from extractant regeneration solutions (not shown at the figure).

Evolved gaseous silicon tetrafluoride is delivered from the unit **4** into soaking chamber **6** for silicon reduction in the quality of which at least one vortex reactor is used equipped with vacuum pump and heating unit. Simultaneously with silicon tetrafluoride, vapour magnesium is delivered to the soaking chamber **6** from the unit **5.** After vacuum pumping out of air, the soaking chamber **6** is heated up to the temperature of 670-800°C. Gaseous silicon tetrafluoride interreacts with magnesium vapour, and reductive reaction *SiF_{4gas} + Mg_{gas} = Si + MgF₂* results in producing reaction mixture which is mixed powders of silicon (Si) and magnesium fluoride (*MgF₂*). Products formed as a result of reductive reaction are cooled down in refrigerating unit **7.** After that silicon powder (Si) is separated from magnesium fluoride (*MgF₂*). In order to get the reaction mixture out of soaking chamber **6,** "transporting" gas is used, namely argon, that is flowed into soaking chamber **6** simultaneously with gaseous silicon tetrafluoride. In the preferred option of implementing the invention it is reasonable to produce silicon in the form of the trade product, i.e. in the form of spherically shaped powder. Considering that silicon smelt and magnesium fluoride smelt have different characteristics, in order to provide efficient separation of the mixture received with simultaneous conversion of silicon into market quality (spherically shaped powder), a method of centrifugal disintegration in inert gas medium is the preferred option for silicon production in the form of spherically shaped powder. In order to perform the method of centrifugal disintegration unit **8** includes melting furnace equipped with crucible that can be rotated and unsmeltable electrode between which plasma arc is maintained. Mixture of silicon and magnesium fluoride powders is sent to the rotating crucible and exposed to the heat of plasma arc formed between crucible and unsmelting electrode. Under the action of heating arc silicon and magnesium fluoride start melting and the molten mass under the influence of centrifugal force is pushed out to the crucible edge and it falls down from crucible in the form of separate drops of silicon and magnesium fluoride. Melt drops in inert atmosphere set solid in the form of separated spherical particles on the way before they hit chamber walls and keep this spherical shape in solid phase. Due to the fact that magnesium fluoride particles are 1,3-1,5 times smaller in size than received silicon spherical powder, it is possible to separate silicon powder with unit **9** (that can be a vibration table, for instance) at a high accuracy level. Produced spherical silicon powder with particles size ranging mainly between 0,3 to 0,6 mm is washed with distilled water and bidistilled water.

Therefore, implementation of the claimed invention allows to continuously produce polycrystalline silicon from fluorosilicic acid solution, polycrystalline silicon in the form of spherically shaped powder with high level of purity (99,99%), increased output of the final product and low prime cost if compared to the existing technologies.

## Claims

1. The technology for production of polycrystalline silicon from fluorosilicic acid solution **characterized by** the following:
- organo-soluble fluosilicate is produced from fluorosilicic acid solution by interreaction between fluorosilicic acid and organic base;
- received salt of fluorosilicic acid is dried with air or inert gas at the temperature of 55-60°C;
- gaseous silicon tetrafluride is produced from fluosilicate;
- gaseous silicon tetrafluride is produced by decompounding fluosilicate into gaseous silicon tetrafluoride and hydrogen fluoride;
- produced gaseous silicon tetrafluoride and hydrogen fluoride unseparated are flowed through silicon dioxide in presence of oleum;
- silicon is reduced from generated gaseous silicon tetrafluoride by magnesium vapour at the temperature not over 1000°C;
- reduction products which are mixture of silicon and magnesium fluoride powder are separated with simultaneous output of polycrystalline silicon in the form of spherically shaped powder;
- produced polycrystalline silicon is separated from magnesium fluoride.

2. The technology according to claim 1 **characterized in that** mixture of silicon powder (Si) and magnesium fluoride (MgF2) formed as a result of reductive reaction are cooled down before separation.

3. The technology according to claim 1 **characterized in that** polycrystalline silicon separation from magnesium fluoride is performed by centrifugal force.

4. The technology according to claim 1 **characterized in that** the final product separation from magnesium fluoride is performed by hydrostatic method.

5. The technology according to claim 1 **characterized in that** reaction mixture separation with simultaneous output of silicon in the form of spherically shaped powder is performed by centrifugal disintegration method.

6. The technology according to claim 5 **characterized in that** in centrifugal disintegration method the reaction mixture of silicon and magnesium fluoride powders is sent to the crucible placed inside melting furnace and able to be rotated where the mixture is exposed to plasma arc formed between crucible and unsmelting electrode.

7. The technology according to claim 6 **characterized in that** centrifugal disintegration is performed in inert gas atmosphere.

8. The technology according to claim 1 **characterized in that** silicon reduction is performed in vortex reactor.

9. The technology according to claim 1 **characterized in that** silicon reduction is performed in presence of argon that provides transportation of gaseous silicon tetrafluoride and getting reaction mixture out of vortex reactor.

10. The technology according to claim 1 **characterized in that** magnesium vapour is sent to vortex reactor from vacuum evaporator.

11. The technology according to claim 1 **characterized in that** fluosilicate is washed up before decompounding.

12. The technology according to claim 1 **characterized in that** unit that provides hydrogen fluoride neutralization with generation of silicon tetrafluoride includes at least on bubbling reactor invaded with silicon dioxide.

13. The technology according to claim 1 **characterized in that** silicon dioxide is immersed into 4-7% oleum solution.

14. The technology according to claim 1 **characterized in that** fluosilicate decompounding is performed by it being treated with concentrated mineral acid.

15. The technology according to claim 14 **characterized in that** oleum containing 3-5 mass% of free sulphuric anhydride is used in the quality of mineral acid.

16. The technology according to claim 1 **characterized in that** polycrystalline silicon is produced in the form of spherically shaped powder with particles size ranging mainly between 0,3 to 0,6 mm.

17. The technology according to claim 16 **characterized in that** spherical silicon powder is washed up with distilled water and bidistilled water.

18. The facility for production of polycrystalline silicon from fluorosilicic acid solution in the form of spherically shaped powder includes units joined by pipeline system:
- unit that provides extraction of fluorosilicic acid solution;
- unit that provides drying of the produced fluorosilicic acid extract; unit that provides extract decompounding with generation of gaseous silicon tetrafluoride and hydrogen fluoride;
- unit that provides hydrogen fluoride neutralization with generation of silicon tetrafluoride;
- unit that provides generation of magnesium vapour from magnesium smelt;
- unit in which silicon is reduced from gaseous silicon tetrafluoride in presence of magnesium;
- unit that provides separation of reaction mixture with simultaneous silicon output in the form of spherically shaped powder;
- unit for the final product separation.

19. The facility according to claim 18 **characterized in that** unit that provides extraction of fluorosilicic acid solution includes at least one centrifugal extractor.

20. The facility according to claim 18 **characterized in that** unit that provides extract drying includes at least one bubbling dryer equipped with heat-exchange apparatus.

21. The facility according to claim 18 **characterized in that** unit that provides extract decompounding with generation of gaseous silicon tetrafluoride and hydrogen fluoride includes at least one centrifugal extractor.

22. The facility according to claim 18 **characterized in that** unit that provides hydrogen fluoride neutralization with generation of silicon tetrafluoride includes at least one bubbling reactor invaded with silicon dioxide.

23. The facility according to claim 18 **characterized in that** centrifugal extractor and bubbling dryer are performed with protective covering.

24. The facility according to claim 23 **characterized in that** protective covering is done based on fluoroplastic.

25. The facility according to claim 18 **characterized in that** in the quality of the unit that provides generation of magnesium vapour from magnesium smelt at least one vacuum evaporator is used.

26. The facility in point 18 **characterized in that** in the quality of unit for silicon reduction at least one vortex reactor is used.

27. The facility according to claim 18 **characterized in that** vacuum evaporator and vortex reactor are done with protective lining.

28. The facility according to claim 27 **characterized in that** vortex reactor is equipped with vacuum pump.

29. The facility according to claim 27 **characterized in that** vortex reactor is equipped with unit to provide its heating.

30. The facility according to claim 18 **characterized in that** unit for silicon production in the form of spherically shaped powder and separation of reaction mixture includes crucible (able to be rotated) placed in melting furnace and electrode between which plasma arc is maintained.

31. The facility according to claim 30 **characterized in that** electrode is unsmelting.

32. The facility according to claim 18 **characterized in that** unit for separation of the final product is performed in the form of vibration table.

33. The facility according to claim 18 **characterized in that** it additionally includes silicon packaging line.

34. The facility according to claim 18 **characterized in that** it additionally includes unit that provides production of polycrystalline silicon in ingots.

35. The facility according to claim 18 **characterized in that** it additionally includes unit for cooling down reaction mixture generated as a result of reduction.
